# EUROPÄISCHE PATENTANMELDUNG

(11) **EP 2 529 870 A1**
(43) Veröffentlichungstag der Anmeldung: **05.12.2012**
(21) Anmeldenummer: 12169795.7
(22) Anmeldetag: 29.05.2012
(51) Int. Cl.: B23D 53/00

(54) **Sägevorrichtung**

(30) Priorität: 01.06.2011 AT 8122011
(71) Anmelder: Griessner, Silverius, 8820 Neumarkt (AT)
(72) Erfinder: Griessner, Silverius, 8820 Neumarkt (AT)
(74) Vertreter: Ellmeyer, Wolfgang

(57) **Zusammenfassung**

Sägevorrichtung (1) zum Sägen eines Werkstückes (2), welche Sägevorrichtung (1) zumindest eine das Werkstück schneidende Sägeeinheit (3), Sägeeinheitsstellvorrichtungen (4), einen Sägeeinheitsantrieb (5) und eine Sägeeinheitshöheneinheit (5) umfasst, wobei die Sägeeinheit (3) in ihrer Schnittrichtung zu einer Vortriebsrichtung (8) des Werkstückes (2) und/oder Achse des Werkstückes (2) stellbar und die Sägeeinheit (3) in ihrer Höhenposition zum Werkstück (2) mittels der Sägeeinheitshöheneinheit (5) verstellbar gelagert ist, wobei die als umlaufend geführtes Sägeband ausgebildete Sägeeinheit (3) mittels beidseitig und in unmittelbarer Nähe zum Schnittbereich (9) angeordneten, stellbaren Sägeeinheitsstellvorrichtungen (4) ausschließlich im Schnittbereich (9) durch eine Verwindung des Sägebandes um die Mittelachse des Sägebandes eine Veränderung der Schnittrichtung in Bezug zur Vortriebsrichtung (8) stellbar ist, wodurch die Sägeeinheit (3) relativ zum Werkstück entlang einer definierten polygonalen Schnittlinie durch das Werkstück (2) führbar ist.

## Beschreibung

Diese Erfindung betrifft eine Sägevorrichtung zum Sägen eines Werkstückes, welche Sägevorrichtung zumindest eine das Werkstück schneidende Sägeeinheit, eine Sägeeinheitsstellvorrichtungen, einen Sägeeinheitsantrieb und eine Sägeeinheitshöheneinheit umfasst, wobei die Sägeeinheit in ihrer Schnittrichtung zu einer Vortriebsrichtung des Werkstückes und/oder Achse des Werkstückes stellbar und die Sägeeinheit in ihrer Höhenposition zum Werkstück mittels der Sägeeinheitshöheneinheit verstellbar gelagert ist.

Sägevorrichtungen nach dem Stand der Technik sind auf das Sägen eines Werkstückes entlang einer im wesentlichen geraden Schnittlinie ausgelegt. In Abhängigkeit von der Art und Ausbildung der Sägeeinheit ist ein Schneiden eines Werkstückes entlang einer polygonalen Schnittlinie nur in einem begrenzten Umfang möglich. Bei einer Verwendung von beispielsweise Bandsägen oder Kettensägen sind die Krümmungen einer polygonalen Schnittführung nur in Abhängigkeit der Breite des Bandes beziehungsweise der umlaufenden Kette möglich.

Es sind weiters Sägevorrichtungen bekannt, welche das Sägen eines Werkstückes entlang einer Schnittlinie erlauben, wobei die Schnittlinie in Teilbereichen eine von einer Vortriebsrichtung unterschiedliche Richtung aufweist.

In US20080276775 ist eine Sägevorrichtung offenbart, welche sich **dadurch auszeichnet, dass** die Sägeeinheit ausschließlich in einem horizontalen oder vertikalen Winkel zu dem zu sägenden Werkstück beziehungsweise der Vorschubrichtung mittels Stellvorrichtung stellbar ist. Die in diesem Dokument offenbarte Vorrichtung zeigt keine technische Lösung zur Unterbindung von Kräften auf die Sägeeinheit, welche während einer Orientierungsänderung der Sägeinheit in Bezug auf eine Vortriebsrichtung entstehen und eine Beschädigung der Sägeeinheit hervorrufen können.

In DE2800902A1 ist eine Sägevorrichtung beschrieben, welche das Schneiden von polygonalen Schnitten durch das Werkstück erlaubt. Im Gegensatz zu der im folgenden diskutierten Lösung wird die polygonale Schnittführung durch eine vertikale Verschiebung und Rotation des gesamten Sägeportals erreicht. Eine Verschiebung und Rotation des gesamten Sägeportals hat den Nachteil, dass im Vergleich zu der im folgenden offenbarten erfindungsgemäßen Methode größere Massen bewegt werden müssen. Letzteres hat einen negativen Einfluss auf die Genauigkeit der Schnittführung und schränkt darüber hinaus die möglichen Schnittführungen stark ein.

DE3312133A1 offenbart eine Sägevorrichtung, welche im Unterschied zu der im folgenden offenbarten Erfindung keine umlaufende Sägeeinheit umfasst.

US6722248B1 beschreibt eine Sägevorrichtung mit zwei abwechselnd arbeitenden Sägeeinheiten.

US6722248B1 zeigt eine Sägeeinheit umfassend ein um eine erste Achse verschiebbares und um eine zweite Achse kippbares Portal, in welchem das Sägeband geführt ist. Es findet sich in US6722248B1 kein Hinweis auf eine Stellung des Sägebandes.

DE2330598 offenbart eine Sägevorrichtung mit einem Sägeband, welches in Bezug auf eine Schablone stellbar ist.

Die hier diskutierte Erfindung stellt sich die Aufgabe, eine Sägevorrichtung bereitzustellen, welche das Sägen eines Werkstückes entlang einer polygonalen, insbesondere einer wellenförmigen Schnittlinie in einem kontinuierlichen Verfahren erlaubt. Im Vergleich zu den Sägevorrichtungen nach dem Stand der Technik zeichnet sich die erfindungsgemäße Sägevorrichtung durch eine genaue Schnittführung aus.

Die sich hier stellende technische Herausforderung ist unter anderem das Unterbinden von Belastungen auf die Sägeeinheit, welche zu einer übermäßigen Belastung und gegebenenfalls zu einer Zerstörung der Sägeeinheit führen. De Belastungen auf die Sägeeinheit hängen auch vom zu schneidenden Werkstück ab. Beim Schneiden von Holz, das unter anderem durch sein variierenden Materialeigenschaften charakterisiert ist, können über den Schnittverlauf durch das Schneiden von Ästen et cetera unterschiedliche Belastungen entstehen. Erfindungsgemäß wird dies dadurch gelöst, dass die als umlaufend geführtes Sägeband ausgebildete Sägeeinheit mittels beidseitig und in unmittelbarer Nähe zum Schnittbereich angeordneten, stellbaren Sägeeinheitsstellvorrichtungen ausschließlich im Schnittbereich durch eine Verwindung des Sägebandes um die Mittelachse des Sägebandes eine Veränderung der Schnittrichtung in Bezug zur Vortriebsrichtung stellbar ist, wodurch die Sägeeinheit relativ zum Werkstück entlang einer definierten polygonalen Schnittlinie durch das Werkstück führbar ist.

Die Stellung der Sägeeinheit mittels der Sägeeinheitsstellvorrichtung wird unter Bedachtnahme einer Unterbindung oder Minimierung von von der Schnittrichtung abweichende Kräften auf die Sägeeinheit durchgeführt. Während des Schneidens des Werkstückes können inbesondere bei einer Richtungsänderung dynamische Belastungen entstehen, welche durch die beidseitigen Sägeeinheitsstellvorrichtungen gut aufgenommen werden können.

Bei einer Schnittführung, welche sich dadurch auszeichnet, dass die Schnittlinie im wesentlichen gerade und parallel zu der Vortriebsvorrichtung orientiert ist, ist die Sägeeinheit parallel zu der Vortriebsrichtung orientiert.

Bei einer polygonalen Schnittführung, welche sich dadurch auszeichnet, dass die Schnittlinie eine von der Vortriebsvorrichtung abweichende Richtung aufweist, ist die Sägeeinheit vorzugsweise im Schneidebereich der Sägeeinheit in eine gleiche Richtung wie die Schnittlinie zu orientieren. Es können Querkräfte, welche in einer von der Schnittlinie abweichenden Richtung auf die Sägeeinheit orientiert sind und ein Brechen der Sägeeinheit verursachen können, minimiert, gegebenenfalls unterbunden werden.

Diese Querkräfte bewirken nämlich eine Dehnung der Sägeeinheit in Abhängigkeit der Stellung der Sägeeinheit zu der Schnittlinie, welche Dehnung eine ungenaue Schnittführung oder eine Beschädigung der Sägeeinheit mit sich ziehen kann. Die erfindungsgemäße Sägevorrichtung kann sich in weiterer Folge dadurch auszeichnen, dass die Dehnung der Sägeeinheit zufolge der Querkräfte minimiert ist. Eine erfindungsgemäße Vorrichtung kann sich dadurch auszeichnen, dass Sägeeinheitsstellvorrichtungen beidseitig, in unmittelbarer Nähe des Werkstückes angeordnet sind. Für den Fall, dass das zu schneidende Werkstück einen in Längsrichtung sich verändernden Querschnitt aufweist, sind die Sägeeinheitsstellvorrichtungen neu zu positionieren. Eine solche Positionierung kann sowohl manuell als auch automatisch erfolgen. Bei letzterem Verfahren ist vorzugsweise vor der Sägeeinheitsstellvorrichtung eine Tastvorrichtung angeordnet, welche Tastvorrichtung die Oberfläche des Werkstückes, folglich den Querschnitt des Werkstückes im Bereich des Schnittbereiches abtastet. Die Stellung der Sägeeinheitsstellvorrichtung erfolgt in Abhängigkeit der mittels der Tastvorrichtung ermittelten Werte.

Die Tastvorrichtung kann eine Walze sein, welche mit der Sägeeinheitsstellvorrichtung mechanisch gekoppelt ist.

Eine Stellung der Sägeeinheit im Schnittbereich, welche eine Verwindung der Sägeeinheit in zumindest einem Teilbereich bedingt, kann eine Neujustierung der Spannkraft der Sägeeinheit bedingen. Die erfindungsgemäße Sägevorrichtung kann Spannvorrichtungsteile im Bereich der Stelleinheiten und/oder im Bereich von Antriebsrädern oder Antriebseinheiten der Sägeeinheit umfassen.

Die hier diskutierte Erfindung schließt nicht aus, dass mehrere, in Bezugnahme auf eine Laufrichtung der Sägeeinheit hintereinander angeordnete Stelleinheiten zum Einsatz kommen, sodass eine schrittweise Stellung der Sägeeinheit und somit schrittweise Dehnung dieser in Längsrichtung bewirkt wird.

Die Stellung der Sägeeinheit ausschließlich im Schnittbereich hat weiters den Vorteil, dass die Stellung der Sägeeinheit ausschließlich im Schnittbereich eine genauere Schnittführung erlaubt.

Zum Stellen der Sägeeinheit im Schnittbereich wird im wesentlichen die Sägeeinheit durch die Sägeeinheitsstellvorrichtung geneigt. Die Sägeeinheitsstellvorrichtung kann eine Führungsvorrichtung sein, durch welche die Sägeeinheit geführt wird.

Eine mögliche Ausführungsform der Sägevorrichtung kann sich dadurch auszeichnen, dass die Sägevorrichtung eine Fördereinheit umfasst, durch welche das Werkstück relativ zur Sägevorrichtung oder umgekehrt bewegt wird.

Der Bewegung des Werkstückes relativ zur Sägeeinheit hat in Abhängigkeit der polygonalen Schnittführung beziehungsweise in Abhängigkeit daraus resultierender Belastungen auf die Sägeeinheit erfolgen, um so die Belastung auf die Sägeeinheit möglichst gering zu halten.

Die Offenbarung der Erfindung schließt nicht aus, dass auch die Sägevorrichtung mittels einer Fördereinheit relativ zum Werkstück bewegt werden kann.

Die Sägevorrichtung kann eine erste Sägeeinheit, welche das Werkstück entlang einer ersten polygonalen Schnittlinie schneidet, und eine zweite Sägeeinheit umfassen, welche das Werkstück entlang einer zweiten polygonalen Schnittlinie schneidet.

Die erfindungsgemäße Vorrichtung ist keinesfalls darauf beschränkt, dass die Schnittlinien parallel zu einander verlaufen müssen.

Die Sägevorrichtung umfasst gegebenenfalls Führungsvorrichtungen, durch welche das ungeschnittene Werkstück und/oder das geschnittene Werkstück so geführt wird, dass ein Verkeilen der Sägeeinheit im ungeschnittenen Werkstück und im geschnittenen Werkstück unterbunden wird.

Die Führungsvorrichtungen verhindern, dass jene Fuge, die durch das Sägen des Werkstückes durch die Sägeinheit entstehen, aufgrund des Gewichtes des geschnittenen Werkstückes geschlossen werden und so die Sägeinheit in der Fuge verkeilt wird.

Die erfindungsgemäße Sägevorrichtung dient zu Sägen von Werkstücken aus allen sägbaren Materialien wie beispielsweise Holz, Stahl, Kunststoffe.
Fig. 1 zeigt eine Ansicht einer Ausführungsform der erfindungsgemäßen Vorrichtung.
Fig. 2 zeigt eine weitere Ansicht der in Fig. 1 dargestellten Vorrichtung.
Fig. 3 zeigt eine Detailansicht der Sägeeinheitsstellvorrichtung.
Fig. 4 zeigt eine Ansicht einer weiteren Ausführungsform der erfindungsgemäßen Vorrichtung.
Fig. 5 zeigt eine weitere Ansicht der in Fig. 4 dargestellten weiteren Vorrichtung.

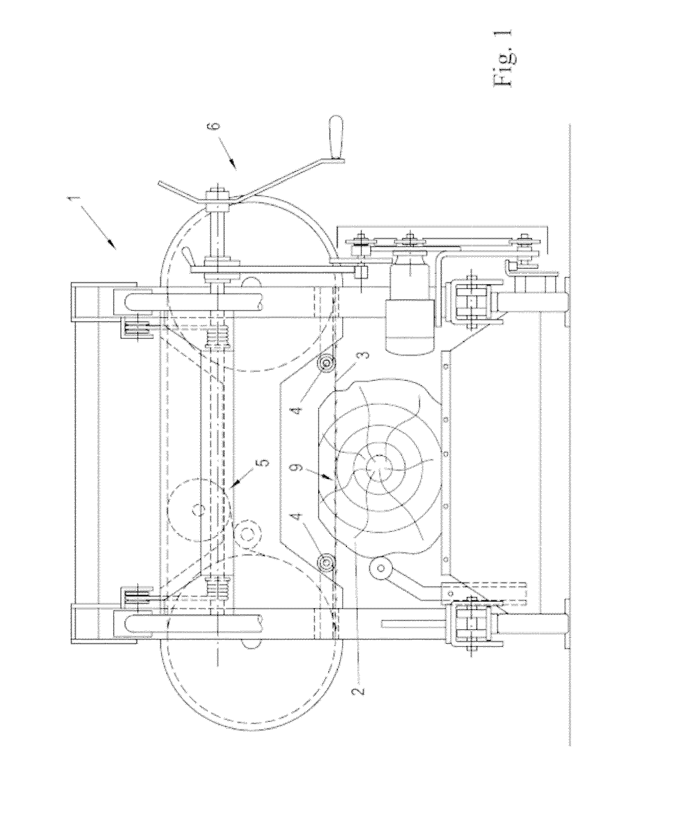

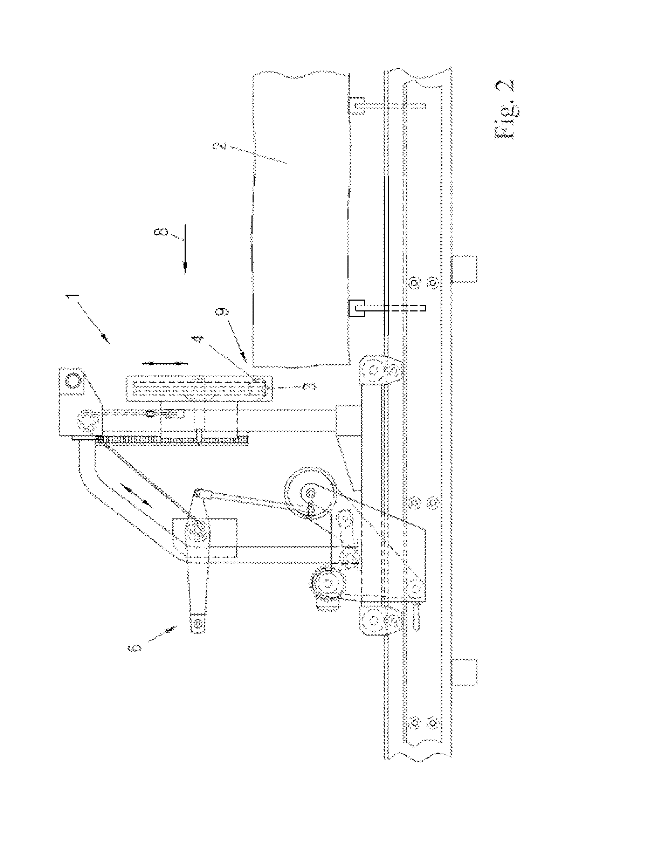

Figur 1 zeigt eine Ansicht einer Ausführungsform der erfindungsgemäßen Vorrichtung, wobei bei der in Figur 1 gezeigten Ansicht in Richtung der Vortriebsrichtung des Werkstückes gesehen wird. Figur 2 zeigt die dazugehörige Seitenansicht. Bei der in Figur 1 dargestellten Vorrichtung ist die Form des Kurvenschnittes manuell über eine Handstellvorrichtung 6 zu definieren.

Die Sägevorrichtung 1 zum Sägen eines Werkstückes 2 umfasst zumindest eine umlaufend geführte Sägeeinheit 3, beidseitig zum Werkstück 2 angeordnete Sägeeinheitsstellvorrichtungen 4, einen Sägeeinheitsantrieb und eine Sägeeinheitshöheneinheit 5. Die Sägeeinheit 3 ist durch die Sägeeinheitsstellvorrichtungen 4 in ihrer Schnittrichtung relativ zu einer Vortriebsrichtung 8 des Werkstückes 2 und/oder einer Achse des Werkstückes 2 stellbar. Die Sägeeinheit 3 ist weiters in ihrer Höhenposition relativ zum Werkstück 2 mittels der Sägeeinheitshöheneinheit 5 verstellbar. Die Sägeeinheitsstellvorrichtungen 4 sind beidseitig und vorzugsweise in unmittelbarer Nähe des zu schneidenden Werkstückes 2 angeordnet, sodass die Sägeeinheit 3 ausschließlich im Schnittbereich 9 durch Veränderung ihrer Richtung in Bezug zu Vortriebsrichtung 8 und in Bezugnahme auf die Schnittgeschwindigkeit der Sägeeinheit während des Führens durch das Werkstück unter Unterbindung von von der Schnittrichtung abweichenden Kräften auf die Sägeeinheit entlang einer definierten polygonalen Schnittlinie durch das Werkstück 2 führbar ist. Die Position der Sägeeinheitsstellvorrichtungen 4 ist in Richtung parallel zu der Sägeeinheit 3 in Abhängigkeit eines sich in Längsrichtung des Werkstückes verändernden Werkstückes stellbar, um so eine Position der Sägeeinheitsstellvorrichtungen 4 möglichst nahe zum Schnittbereich 9 gewährleisten zu können. Die Stellung der Sägeeinheitsstellvorrichtungen 4 kann automatisch als auch manuell erfolgen.

Mittels einer Werkstückaufnahme wird das Werkstück 2 relativ zur Sägevorrichtung 1 bewegt.

Die Sägeeinheitshöheneinheit 5 und die Sägeeinheitsstellvorrichtungen 4 sind miteinander gekoppelt, sodass zur Bewerkstelligung der polygonalen Schnittführung die Neigung und die Höhenposition der Sägeeinheit 2 während des Führens der Sägeeinheit 3 durch das Werkstück gestellt wird. Die in Figur 2 dargestellte Vorrichtung zeigt eine Handstellvorrichtung 6 zur Betätigung der Sägeeinheitshöheneinheit 5 und der Sägeeinheitsstellvorrichtungen 4.

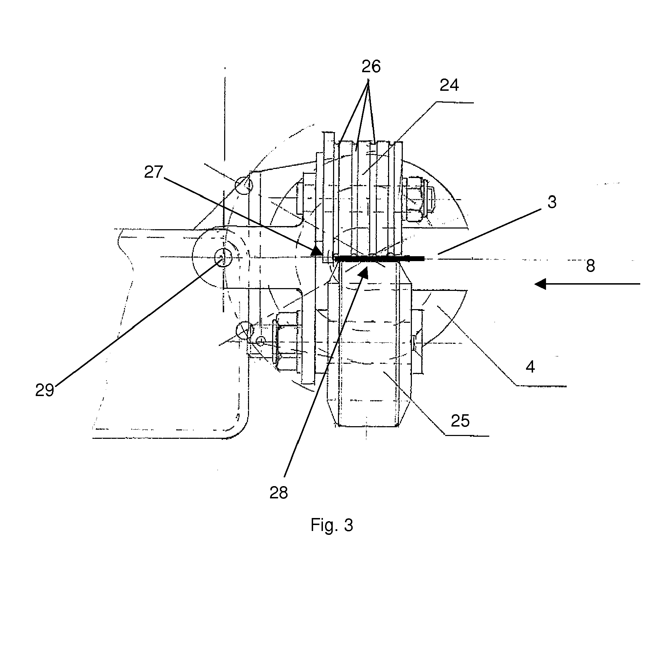

Figur 3 zeigt eine Detailansicht der Sägeeinheitsstellvorrichtungen 4. Die Sägeeinheit 3 ist zum einem durch zwei Rollen 24, 25 geführt. Die eine Rolle 25 ist aus Kunststoff hergestellt und weist an ihren Laufoberflächen eine glatte Oberfläche auf. Die andere Rolle 24 ist aus Stahl hergestellt und weist an ihrer Laufoberfläche Rillen 26 auf. Die Herstellung zumindest einer Rolle der Rollen 24,25 aus einem Kunststoff zieht den Vorteil mit sich, dass Sägespäne, welche zwischen eine der Rollen 24,25 und die Sägeeinheit 3 geraten, nicht durch eine durch die Präsenz der Sägespäne hervorgerufenen Verformung der Sägeeinheit 3, die Sägeeinheit 3 beschädigen. Die aus Kunststoff hergestellte Rolle 24 kann die durch die Präsenz der Sägespäne bedingte Deformation der Sägeeinheit 3 aufnehmen.

Die Rillen 26 dienen zur Kühlung der Rolle 24.

Die Sägeeinheit 3 ist zum anderen durch den Anschlag 27 geführt, welcher Anschlag 27 eine Bewegen der Sägeeinheit 3 von den Rollen 24,25 weg in Richtung der Vortriebsrichtung 8 unterbindet.

Die Sägestelleinheit 4 ist an einem Auflagerpunkt 29 gelagert. Die Drehung der Sägestelleinheit 4 erfolgt stets so, dass der Punkt 28, welcher Punkt 28 der Mittelpunkt des Querschnittes der Sägeeinheit 3 ist, auch der Zentrumspunkt der Drehbewegung der Sägeinheit 4 ist.

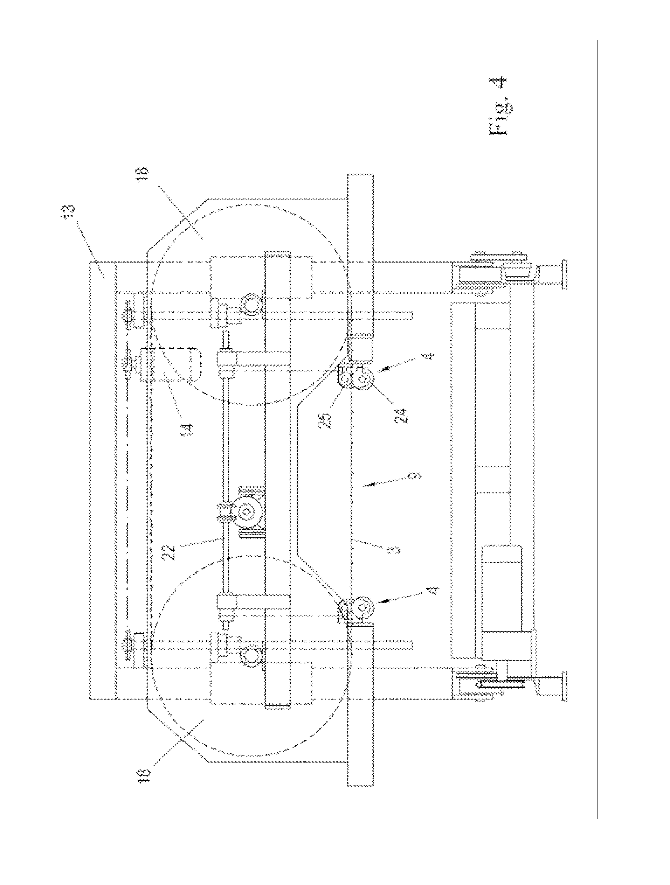

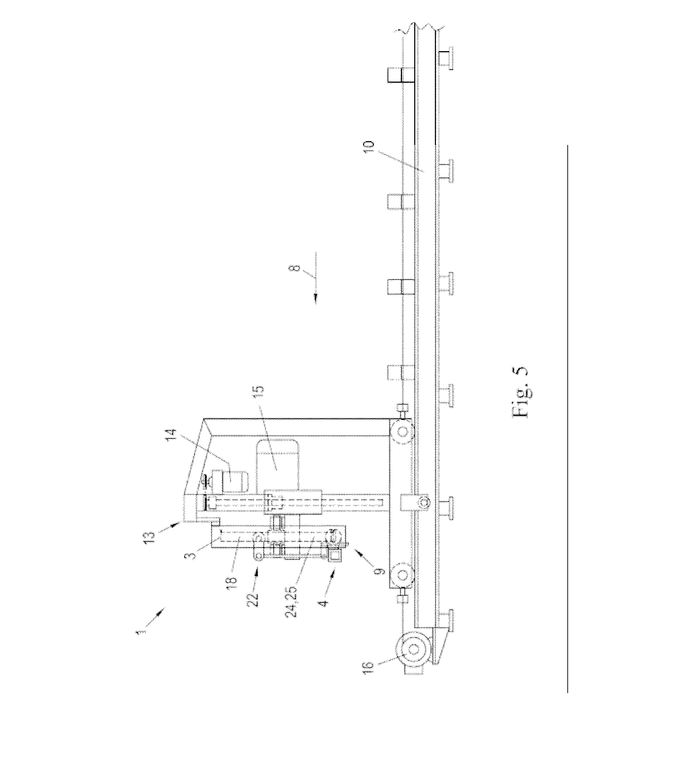

Figur 4 und Figur 5 zeigen Ansichten einer weiteren Ausführungsform der erfindungsgemäßen Sägevorrichtung, welche im Unterschied zu der in Figur 1 und Figur 2 dargestellten Vorrichtung die Bedienung der weitern Vorrichtung automatisch erfolgt.

Es ist hierzu die Sägeeinheit 3 über Sägeeinheitsantriebsräder 18 geführt, wobei im Schnittbereich 9 (Werkstück in Figur 4 und Figur 5 nicht dargestellt) die Stellung der Sägeeinheit 3 durch Sägeeinheitsstellvorrichtungen 4 veränderbar ist. Die Sägeinheitsstellvorrichtungen 4 sind in Richtung parallel zu der Erstreckungsrichtung der Sägeeinheit 3 im Bereich der Sägeeinheitsstellvorrichtung 4 beziehungsweise im Schnittbereich 9 verstellbar, um die Sägeeinheitsstellvorrichtung 4 möglichst nahe zu der Oberfläche des zu schneidenden Werkstückes 2 zu positionieren.

Vorzugsweise wird im Bereich der Sägeeinheitsstellvorrichtung 4 die Sägeeinheit 3 durch zwei Rollen 24, 25 beidseitig geführt. Die Sägeeinheitsantriebsräder 18 umfassen Vorrichtungen zur Steuerung beziehungsweise Kompensation der sich durch die Stellung der Sägeeinheit 3 bedingte Längenänderung der Sägeeinheit 3. Die Betätigung der Sägeeinheitsstellvorrichtung 4 erfolgt über ein Stellwerk 22, welches mit einem Stell-Servomotor 15 gekoppelt ist.

Die Höhenverstellung der Sägeeinheit 3 erfolgt auf die Weise, dass das Sägeportal entlang eines Sägerahmens 13 vertikal mit Hilfe von Kugelspindeln gestellt wird. Die Kugelspindel sind mit einem Höhen-Servomotor 14 gekoppelt.

Das Holzwerkstück 2 (in Figur 4 und Figur 5 nicht dargestellt), wird in Richtung 8 relativ zu der Sägeinheit 3 bewegt. Die hier diskutierte Ausführung der erfindungsgemäßen Vorrichtung zeichnet sich dadurch aus, dass die Sägeeinheit 1 auf Schienen 10 gelagert ist und über die Betätigung mittels eines Vorschub-Servomotors 16 relativ zum Werkstück 2 entgegen der Richtung 8 bewegt wird. Dies hat den Vorteil, dass die im Vergleich zu dem anzunehmenden Gewicht des Holzwerkstückes leichtere Sägeeinheit 1 verschoben wird.

## Patentansprüche

1. Sägevorrichtung (1) zum Sägen eines Werkstückes (2), welche Sägevorrichtung (1) zumindest eine das Werkstück schneidende Sägeeinheit (3), Sägeeinheitsstellvorrichtungen (4), einen Sägeeinheitsantrieb (5) und eine Sägeeinheitshöheneinheit (5) umfasst, wobei die Sägeeinheit (3) in ihrer Schnittrichtung zu einer Vortriebsrichtung (8) des Werkstückes (2) und/oder Achse des Werkstückes (2) stellbar und die Sägeeinheit (3) in ihrer Höhenposition zum Werkstück (2) mittels der Sägeeinheitshöheneinheit (5) verstellbar gelagert ist, **dadurch gekennzeichnet, dass**
die als umlaufend geführtes Sägeband ausgebildete Sägeeinheit (3) mittels beidseitig und in unmittelbarer Nähe zum Schnittbereich (9) angeordneten, stellbaren Sägeeinheitsstellvorrichtungen (4) ausschließlich im Schnittbereich (9) durch eine Verwindung des Sägebandes um die Mittelachse des Sägebandes eine Veränderung der Schnittrichtung in Bezug zur Vortriebsrichtung (8) stellbar ist, wodurch die Sägeeinheit (3) relativ zum Werkstück entlang einer definierten polygonalen Schnittlinie durch das Werkstück (2) führbar ist.

2. Sägevorrichtung (1) nach Anspruch 1, **dadurch gekennzeichnet, dass** die Sägevorrichtung eine Fördervorrichtung umfasst, durch welche das Werkstück (2) relativ zur Sägevorrichtung (1) oder umgekehrt bewegt wird.

3. Sägevorrichtung (1) nach einem der Ansprüche 1-2, **dadurch gekennzeichnet, dass** die Sägevorrichtung (1) eine erste Sägeeinheit (3), welche das Werkstück (2) entlang einer ersten polygonalen Schnittlinie schneidet, und eine zweite Sägeeinheit umfasst, welche das Werkstück (2) entlang einer zweiten polygonalen Schnittlinie schneidet.

4. Sägevorrichtung (1) nach einem der Ansprüche 1-3, **dadurch gekennzeichnet, dass** die Sägevorrichtung Führungsvorrichtungen umfasst, durch welche das ungeschnittene Werkstück (2) und/oder das geschnittene Werkstück (2) so geführt wird, dass ein Verkeilen der Sägeeinheit (3) im ungeschnittenen Werkstück (2) und im geschnittenen Werkstück (2) unterbunden wird.
